Europäisches Patentamt

European Patent Office

Office européen des brevets

(19)

(11) Publication number: **0 070 374**
**B1**

# (12) EUROPEAN PATENT SPECIFICATION

(45) Date of publication of patent specification: **29.01.86**

(21) Application number: **82104632.3**

(22) Date of filing: **27.05.82**

(51) Int. Cl.⁴: **B 01 D 53/20,** F 28 F 25/08,
C 02 F 3/10

(54) Filling bodies.

(30) Priority: **17.07.81 IT 2299381**

(43) Date of publication of application:
**26.01.83 Bulletin 83/04**

(45) Publication of the grant of the patent:
**29.01.86 Bulletin 86/05**

(84) Designated Contracting States:
**CH DE FR GB LI**

(56) References cited:
**DE-A-2 928 784**
**DE-C- 191 890**
**FR-A-1 130 730**
**FR-A-1 405 374**

(73) Proprietor: **HYDRO SYSTEM S.R.L.**
**Via 5 Giornate, 1040**
**I-21042 Caronno Pertusella (Va) S.S. Varesina**
**(IT)**

(72) Inventor: **Filippetti, Lena**
**Via De Amicis**
**I-20020 Solaro (Milan) (IT)**

(74) Representative: **Dr. Ing. A. Racheli & C.**
**Viale San Michele del Carso, 4**
**I-20144 Milano (IT)**

Courier Press, Leamington Spa, England.

## Description

The present invention relates to filling or packing bodies which are normally used in water conditioning or softening systems, and more generally whenever desiring to concentrate in a basin, tower or column a vary large surface for carrying out a transfer of mass or any chemical-biophysical process.

Filling or packing bodies of different type are already known; one of the most widely known has a cylindrical shape and central cores, as well as side apertures. When arranged in bulk within a container, these bodies have considerable specific weight and poor contact surface per cubic meter and do not allow uniform flow rates of the liquid and gas phases in counter-current.

There are also filling or packing bodies in the shape of saddle, tube and ring: such bodies exhibit quite large contact surfaces, but have substantial load losses and also a considerable specific weight. Additionally, they have a natural trend for orderly arrangement, giving rise to preferential passages for the descending liquid phase. They also create stagnation zones for the liquids.

A filling body known from a very old Patent (DE—C—191890) is made from a full spheroidal body where holes have been carved. These holes have the form of a funnel having the vertex directed towards the center of the sphere which remains empty. These filling bodies are very heavy and have reduced free spaces when arranged in bulk.

Other packings (DE—A—2928784) foresee diametral partially staggered walls which are contained in a sphere. They have a poor resistance when packed in large quantity and an insufficient contacting surface. Thus the tower or column must be divided by partition walls which support the weight of the packings covered by the reacting fluid. The insufficient contacting surface furthermore obliges the carrying out of very bulky towers.

Therefore, it is the object of the present invention to provide a filling or packing body capable of constituting a large filling mass having large useful surface, low load loss, reduced specific weight, maximum free volume and high flow rate, while not allowing any stagnation of the exchange fluids.

The above object has been achieved by the features specified in the appended claim 1. Other preferred solutions have been defined in subsequent claims 2—6.

The present invention will now be more clearly explained with reference to some exemplary embodiments that have been shown in the accompanying drawings, in which:

Fig. 1 is a top view of a known filling or packing body;

Fig. 2 is a view of the same body rotated through 90°;

Fig. 3 is a top view of an embodiment of the present invention;

Figs. 4 and 5 are further exemplary embodiments according to the invention.

Fig. 6 is a perspective view of an embodiment comprising a plurality of truncated cones with the vertices truncated in direction of the hollow center.

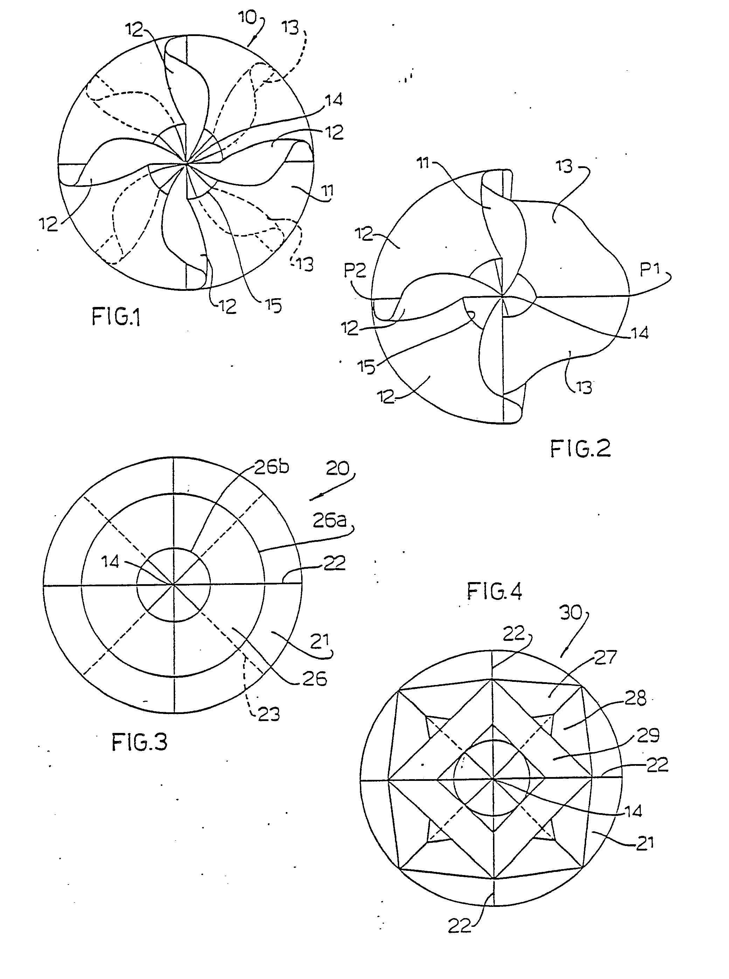

Referring first to Figs. 1 and 2, it will be seen that the known filling body indicated at 10 has a nearly diametrical wall 11, the median line of which is contained within the drawing plane of Fig. 1. It may be undulated, as shown in Fig. 2. This wall 11 is reached by four upper walls 12 and four lower walls 13 indicated by dashed line in Fig. 1. The median line of these surfaces extends orthogonally to the diametrical wall 11, that is the median lines of walls 12 and 13 may be considered as meridian half-planes of a sphere, the poles of which are P1 and P2 (Fig. 2). All of these walls are undulated and directed to the center 14 of the sphere, which is however without material, that is hollow, since all of the walls stop in order to provide a free central space indicated at 15. The lower walls 13 are staggered relative to the upper walls 12.

Fig. 3 shows a filling body according to the present invention. For the sake of simplicity, all the walls have been shown therein by only the median lines thereof; that is, the undulations thereof have not been taken into account. However, it is obvious that in this case and in the following ones all of the walls will be preferably undulated. The filling or packing body, in this case indicated at 20, comprises a diametrical wall 21 contained within the plane of the drawing sheet, and at the top thereof four walls 22 corresponding to walls 12 of Fig. 1, and four walls 23 arranged at the bottom of said diametrical wall 21. A cone portion 26 is also provided and has a border 26a which is such as to be on the periphery of the ideal sphere having center 14 and the innermost wall of which extends to the border 26b. Also in this case there is no wall near the center 14 of the ideal sphere.

Fig. 4 shows a further embodiment of the filling or packing body according to the present invention, which has been herein indicated as a whole at 30. In this case, in the sphere quadrant, between a diametrical wall 21, diametrically extending in the drawing plane, and meridian walls 22, a frusto-conical pyramid is provided as formed by the walls 27, 28 and 29, which pyramid also has the ideal vertex directed in the sphere center 14, which is hollow and free.

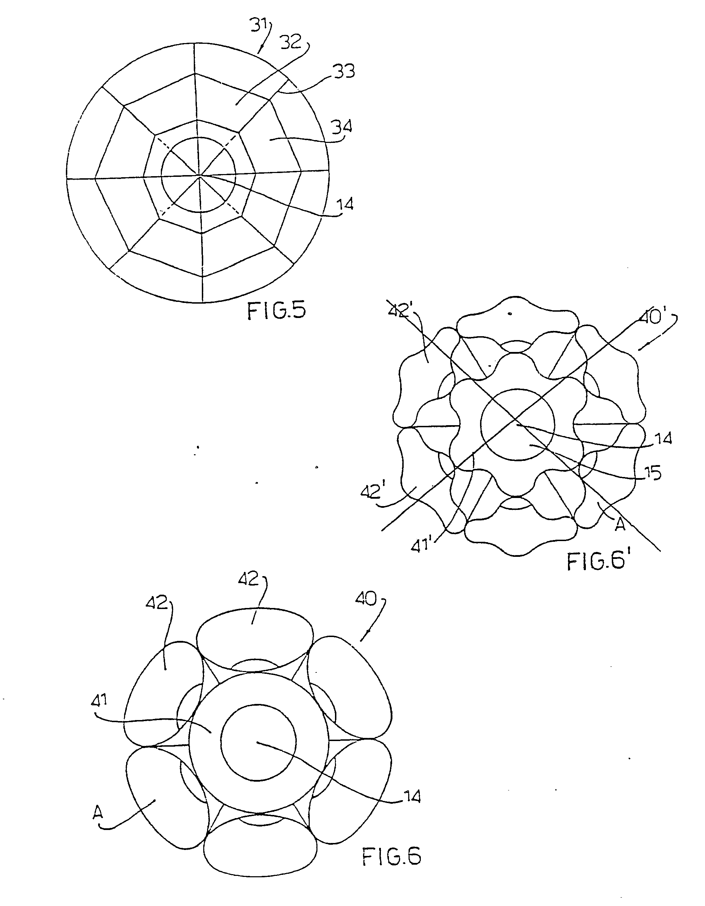

In Fig. 5 there is shown a further filling or packing body, generally indicated at 31, in which three "y" arranged walls 32, 33 and 34 are provided in a quadrant, which walls are also all directed towards the hollow center of the sphere.

In Fig. 6 a perspective example is given for a filling body 40 formed in each hemisphere by a central truncated cone 41 with undulated walls and six peripheral truncated cones 42, symmetrically distributed about the central truncated cone 41.

It is evident that the inventor is not intended to exclude that in same filling or packing body smooth and undulated walls may coexist, provided that the above mentioned basic features realizing the provided objects are complied with.

It is also provided that any zone of one of the filling or packing bodies, for example the zone indicated in Fig. 6 at A, is composed of material having different specific gravity than that of the remaining parts, so that the body is oriented when arranged in bulk.

**Claims**

1. A filling or packing body comprising a plurality of walls contained within an ideal sphere, and directed to the center (14) of said sphere, said center zone remaining however empty, at least some of these walls being undulated, characterized in that the walls (27, 28, 29; 41, 42) have the shape of a truncated cone or pyramid having the vertex in the hollow center (14) of the sphere.

2. A filling or packing body according to claim 1, characterized by comprising also a diametrical plane (21) and meridian half planes (22, 23).

3. A filling or packing body according to claim 1 or 2, characterized in that at least some of its walls are made specular or mirror-like, particularly metallized, so that the same may be used as good heat and/or electricity conducting surfaces.

4. A filling or packing body according to any of the preceding claims, characterized in that the walls in their thickness are porous with open cells, that is communicating with the outside.

5. A filling or packing body according to any of the preceding claims, characterized in that the wall surfaces are made porous or rough to promote the adhesion of micro-organism colonies partaking to the ecological purification action.

6. A filling or packing body according to any of the preceding claims, characterized in that in at least one zone (A) of its walls it has a different specific gravity or mass to impart the trend to the individual bodies of self-orientation.

**Patentansprüche**

1. Füllkörper, der aus einer Mehrzahl von gewellten Wänden besteht, die in einer imaginären Kugel enthalten und zur Mitte (14) der Kugel gerichtet sind, wobei jedoch der Mittelbereich freibleibt und wenigstens einige dieser Wände gewellt sind, dadurch gekennzeichnet, dass die Wände (27, 28, 29, 41, 42) kegelstumpfoder pyramidenstumpfförmig mit der Spitze zur hohlen Mitte (14) der Kugel ausgebildet sind.

2. Füllkörper nach Anspruch 1, dadurch gekennzeichnet, dass er eine diametrale Ebene (12) und halbe Längsebenen (22, 23) enthält.

3. Füllkörper nach Anspruch 1 oder 2, dadurch gekennzeichnet, dass wenigstens einige seiner Wände spiegelblank, insbesondere metallisiert sind, sodass sie als gut wärme- und/oder elektrischleitende Oberflächen verwendet werden können.

4. Füllkörper nach einem der obigen Ansprüche, dadurch gekennzeichnet, dass die Wände in ihrer inneren Stärke in poröser Form mit offenen Zellen, d.h. mit dem Aussern komunizierend, verwirklicht sind.

5. Füllkörper nach einem der vorstehenden Ansprüche, dadurch gekennzeichnet, dass die Oberfläche der Wände porös oder rauh ist, um das Anhaften der Mikroorganismokolonien, die an der ökologischen Reinigungswirkung teilhaben, zu begünstigen.

6. Füllkörper nach einem der vorstehenden Ansprüche, dadurch gekennzeichnet, dass er in wenigstens einem Bereich (A) seiner Wände ein spezifisches Gewicht oder eine unterschiedliche Masse hat, um den einzelnen Körpern die Tendenz zu geben, inner eine bestimmte Stellung einzunehmen.

**Revendications**

1. Corps de remplissage formé d'une pluralité de parois ondulées contenues dans une sphère idéale et dirigées vers le centre (14) de ladite sphère, tout en laissant la zone centrale vide — au moins certaines de ces parois étant ondulées — caractérisé par le fait que les parois (27, 28, 29, 41, 42) ont la forme d'un tronc de cône ou de pyramide tronquée ayant son sommet dans le centre creux (14) de la sphère.

2. Corps de remplissage selon la revendication 1, caractérisé per le fait qu'il comprend aussi un plan diamétral (11) et des demi-plans méridiens (22, 23).

3. Corps de remplissage selon la revendication 1 ou 2, caractérisé par le fait qu'au moins quelques-unes de ses parois sont rendues spéculaires, surtout métallisées, de sorte qu'elles puissent être utilisées comme de bonnes surfaces conductrices de chaleur et/ou d'électricité.

4. Corps de remplissage selon n'importe laquelle des revendications précédentes, caractérisé par le fait que les parois dans leur épaisseur intérieure sont réalisées en forme poreuse à cellules ouvertes, c'est-à-dire communiquant avec l'extérieur.

5. Corps de remplissage selon n'importe laquelle des revendications précédentes, caractérisé par le fait que les surfaces des parois sont rendues poreuses ou rêches pour favoriser la fixation des colonies de microorganismes qui participent à l'action écologique d'épuration.

6. Corps de remplissage selon n'importe laquelle des revendications précédentes, caractérisé par le fait qu'au moins dans une zone (A) de ses parois il a un poids spécifique ou masse différent pour donner à chacun des corps la tendance à prendre, de façon autonome, des orientations différentes.

FIG.1

FIG.2

FIG.3

FIG.4

FIG.5

FIG.6'

FIG.6